# EUROPEAN PATENT APPLICATION

(11) **EP 4 641 727 A1**
(43) Date of publication of application: **29.10.2025**
(21) Application number: 23910896.2
(22) Date of filing: 29.12.2023
(51) Int. Cl.: H01M 10/052, H01M 4/58, H01M 4/38

(54) **LITHIUM BATTERY AND PREPARATION METHOD AND CONTROL METHOD THEREFOR, BATTERY SYSTEM, AND ELECTRIC VEHICLE**

(30) Priority: 29.12.2022 CN 202211742564
(71) Applicant: BYD Company Limited, Shenzhen, Guangdong 518118 (CN)
(72) Inventor: MA, Yongjun, Shenzhen, Guangdong 518118 (CN); GUO, Zizhu, Shenzhen, Guangdong 518118 (CN); ZENG, Fanglian, Shenzhen, Guangdong 518118 (CN); PAN, Yi, Shenzhen, Guangdong 518118 (CN); GAO, Tianji, Shenzhen, Guangdong 518118 (CN)
(74) Representative: Taor, Simon Edward William
(86) International application number: PCT/CN2023/143050
(87) International publication number: WO 2024/140982

(57) **Abstract**

A lithium battery, comprising a positive electrode and a negative electrode, wherein a negative electrode material layer of the negative electrode comprises a lithium-silicon composite negative electrode active material, and when the lithium battery is charged to 100% SOC, the lithium-silicon composite negative electrode active material comprises a lithium-silicon alloy Li_{4.4}Si and elemental lithium; and the positive electrode comprises a first positive electrode active material and a second positive electrode active material, wherein the first positive electrode active material contains lithium, and the second positive electrode active material comprises elemental sulfur and/or a sulfur-containing compound. Further provided in the present application are a preparation method and a control method for the lithium battery, a battery system comprising the lithium battery, and an electric vehicle.

## Description

### CROSS-REFERENCE TO RELATED APPLICATIONS

The present disclosure claims priority to and benefits of Chinese Patent Application No. 202211742564.3, filed on December 29, 2022 and entitled "LITHIUM BATTERY AND PREPARATION METHOD AND CONTROL METHOD THEREFOR, BATTERY SYSTEM, AND ELECTRIC VEHICLE". The entire content of the above-referenced application is incorporated herein by reference.

### FIELD

The present disclosure relates to the field of lithium battery technologies, and specifically, to a lithium battery and preparation method and control method therefor, a battery system, and an electric vehicle.

### BACKGROUND

A lithium battery has been widely used in the fields of portable electronic products such as a mobile phone and a notebook computer, as well as new energy vehicles. Currently, energy density of a commercial lithium battery based on a conventional graphite negative electrode has reached the top, and can no longer meet people's growing demands for battery life and standby power. A lithium metal and a silicon-based negative electrode material are considered to be a preferred choice for a next generation of high energy density battery negative electrode material due to a high theoretical specific capacity of the lithium metal and the silicon-based negative electrode material.

During actual use of a new energy vehicle, there may be different mode requirements of endurance mileages. However, an existing lithium battery using a lithium metal or a silicon-based negative electrode material rarely can satisfy user requirements for different endurance mileage modes, and rarely can withstand deep discharge.

### SUMMARY

In view of this, the present disclosure provides a lithium battery and preparation method and control method therefor, a battery system, and an electric vehicle, to resolve a problem that a current lithium battery cannot meet requirements of a user for different endurance mileage modes and that the lithium battery has poor performance in withstanding over-discharge.

Specifically, according to a first aspect, the present disclosure provides a lithium battery, including:
a positive electrode, including a first positive electrode active material and a second positive electrode active material, where the first positive electrode active material includes a lithium element, and the second positive electrode active material includes elemental sulfur and/or a sulfur-containing compound; and
a negative electrode, including a negative electrode material layer, where the negative electrode material layer includes a lithium-silicon composite negative electrode active material, and when the lithium battery is charged to an SOC of 100%, the lithium-silicon composite negative electrode active material includes a lithium-silicon alloy Li_{4.4}Si and elemental lithium.

Because the negative electrode of the lithium battery provided in the first aspect of the present disclosure includes the lithium-silicon composite negative electrode active material, and the positive electrode includes both the first positive electrode active material and the second positive electrode active material, the lithium battery can exert a high energy density characteristic and a long cycle life characteristic as needed, and also has good performance in withstanding over-discharge. The lithium battery can provide an emergency endurance mileage during over-discharge without apparently damaging a positive electrode structure of the battery and without apparently affecting a cycle life of the battery.

In some implementations, a lithium intercalation starting potential of the second positive electrode active material is less than or equal to a lithium intercalation cut-off potential of the first positive electrode active material, and a lithium intercalation cut-off potential of the second positive electrode active material is greater than a potential at which a transition metal element in the first positive electrode active material undergoes an irreversible reduction reaction.

In some implementations, the first positive electrode active material includes one or more of a transition metal oxide of lithium and a lithium-containing phosphate, and/or the sulfur-containing compound includes one or more of metal sulfide and sulfurized polyacrylonitrile. A metal element in the metal sulfide includes one or more of lithium, molybdenum, copper, silver, titanium, zinc, manganese, iron, cobalt, and nickel.

In some implementations, a mass of the second positive electrode active material is 1.6% to 22% of a mass of the first positive electrode active material.

In some implementations, when the lithium battery is charged to the SOC of 100%, a mole fraction of the elemental lithium in the lithium-silicon composite negative electrode active material ranges from 15% to 95%.

In some implementations, when the lithium battery is charged to a level not exceeding a first SOC threshold, the lithium-silicon composite negative electrode active material does not include the elemental lithium, and includes a lithium-silicon alloy LiₓSi. 0<x≤4.4, and the first SOC threshold ranges from an SOC of 15% to an SOC of 95%.

In some implementations, a surface of the negative electrode material layer has a protective layer, or a surface of the lithium-silicon composite negative electrode active material has a protective layer. The protective layer includes a polymer matrix and a lithium salt.

In some implementations, the polymer matrix includes one or more of polyethylene oxide, polysiloxane, polyvinylidene fluoride, polymethyl methacrylate, polyacrylonitrile, and a derivative and copolymer thereof. The lithium salt includes one or more of lithium nitrate, lithium sulfide, lithium chloride, lithium bromide, lithium iodide, lithium fluoride, and lithium phosphate.

In some implementations, the lithium battery further includes an electrolyte solution. A solvent in the electrolyte solution includes at least one of a non-halogenated ether solvent and a fluorinated ether solvent.

According to a second aspect, the present disclosure further provides a preparation method for a lithium battery, including the following steps:

A silicon-based material layer including a silicon-based material is formed on a negative electrode current collector, and hot pressing is performed on lithium metal and the silicon-based material layer in an inert atmosphere, so that the lithium metal and the silicon-based material react in situ to form a negative electrode material layer including a lithium-silicon composite negative electrode active material, to obtain a negative electrode;
a positive electrode is provided, the positive electrode including a first positive electrode active material and a second positive electrode active material, where the first positive electrode active material includes a lithium element, and the second positive electrode active material includes elemental sulfur and/or a sulfur-containing compound; and
the negative electrode and the positive electrode are assembled into the lithium battery, where when the lithium battery is charged to an SOC of 100%, the lithium-silicon composite negative electrode active material includes a lithium-silicon alloy Li_{4.4}Si and elemental lithium.

The preparation method for the lithium battery has simple process and is easy to control.

In some implementations, in the negative electrode, the lithium-silicon composite negative electrode active material includes a lithium-silicon alloy LiₓSi, and does not include the elemental lithium. x≤4.4.

In some implementations, the silicon-based material includes one or more of elemental silicon, a silicon oxide, and a silicon-based non-lithium alloy.

In some implementations, the lithium metal is a lithium thin film. The method further includes: A protective layer is formed on a surface of the silicon-based material layer before hot pressing is performed on the lithium metal and the silicon-based material layer in the inert atmosphere; or a protective layer is formed on a surface of the negative electrode material layer after the negative electrode material layer is formed. The protective layer includes a polymer matrix and a lithium salt.

According to a third aspect, the present disclosure provides a control method for the foregoing lithium battery, including:
A charge cut-off voltage for charging the lithium battery is controlled to be Vₕ when an instruction indicating that the lithium battery enters a first preset mode is received.

Vₕ>Vₛ. At Vₛ, no elemental lithium is precipitated at the negative electrode of the lithium battery. When a charging voltage of the lithium battery is between Vₛ and Vₕ, a lithium-silicon composite negative electrode active material includes Li_{4.4}Si and the elemental lithium.

The control method is used to charge the foregoing lithium battery, so that it can be ensured that the lithium battery can meet a long cycle life requirement for high-frequency regular endurance, and can also meet a low-frequency long endurance requirement.

In some implementations, the charge cut-off voltage for charging the lithium battery is controlled to be Vₛ when an instruction indicating that the lithium battery enters a second preset mode is received.

In some implementations, during charging of the lithium battery, when the charging voltage of the lithium battery reaches Vₛ, the lithium battery is controlled to continue to be charged to Vₕ when the instruction indicating that the lithium battery enters the first preset mode is received, and charging of the lithium battery is controlled to be stopped when the instruction indicating that the lithium battery enters the first preset mode is not received.

According to a fourth aspect, the present disclosure provides another control method for the foregoing lithium battery, including:
The lithium battery is controlled to be discharged to a first discharge threshold voltage V₁ when an instruction indicating that the lithium battery enters a third preset mode is received. V₁ is greater than or equal to a potential V_{R} at which a transition metal element in the first positive electrode active material undergoes an irreversible reduction reaction.

The control method is used to discharge the foregoing lithium battery, so that it can be ensured that in an emergency situation where a circuit of the lithium battery is close to being exhausted, a second positive electrode active material can be activated to enable the lithium battery to continue to output power and provide an emergency endurance mileage.

In some implementations, when a voltage of the lithium battery during discharging is close to a second discharge threshold voltage V₂, the lithium battery is controlled to continue to be discharged to the first discharge threshold voltage V₁ when the instruction indicating that the lithium battery enters the third preset mode is received. V₂>V₁, and V₂ is equal to a lithium intercalation cut-off potential of the first positive electrode active material.

In some implementations, V₁ satisfies: V₁=βV_{R}. 1.0≤β≤1.5.

According to a fifth aspect, the present disclosure further provides a battery management system. The battery management system includes a memory and a processor. The memory stores program instructions, and the processor is adapted to load the program instruction and perform the control method for a lithium battery according to the third aspect of the present disclosure, and/or perform the control method for a lithium battery according to the fourth aspect of the present disclosure.

According to a sixth aspect, the present disclosure further provides a battery system for an electric vehicle. The battery system includes a battery management system and at least one lithium battery according to the first aspect of the present disclosure.

The electric vehicle uses the battery system having the foregoing lithium battery, a charge cut-off voltage for charging each lithium battery and a discharge cut-off voltage for discharging each lithium battery may be adjusted according to an actual endurance mileage requirement for the electric vehicle.

In some implementations, the battery management system is configured to control, before or during charging of the lithium battery and when it is learned that the electric vehicle is to operate in a first mode, a charge cut-off voltage for charging the lithium battery to be Vₕ.

Vₕ is an upper limit charge voltage that the lithium battery can withstand, and Vₕ>Vₛ. At Vₛ, no elemental lithium is precipitated at the negative electrode of the lithium battery. When a voltage of the lithium battery is between Vₛ and Vₕ, a lithium-silicon composite negative electrode active material includes Li_{4.4}Si and the elemental lithium.

In some implementations, the battery management system is configured to control, before or during charging of the lithium battery and when it is learned that the electric vehicle is to operate in a second mode, the charge cut-off voltage for charging the lithium battery to be V_{S}. An endurance mileage of the electric vehicle in the second mode is less than an endurance mileage of the electric vehicle in the first mode.

In some implementations, the battery management system is configured to control, before or during discharging of the lithium battery and when it is learned that the electric vehicle is to operate in a third mode in which a second positive electrode active material can exert a capacity, a discharge cut-off voltage for discharging the lithium battery to be V₁.

V₁ is greater than or equal to a potential at which a transition metal element in the first positive electrode active material undergoes an irreversible reduction reaction.

In some implementations, the battery management system is the battery management system according to the fifth aspect of the present disclosure.

According to a seventh aspect, the present disclosure further provides an electric vehicle. The electric vehicle has the battery system according to the sixth aspect of the present disclosure.

### BRIEF DESCRIPTION OF THE DRAWINGS

FIG. 1A and FIG. 1B are two schematic diagrams of structures of a lithium battery according to an embodiment of the present disclosure;
FIG. 2 shows a discharge curve of a lithium battery according to an embodiment of the present disclosure;
FIG. 3 is a schematic diagram of a structure of an electric vehicle according to an embodiment of the present disclosure;
FIG. 4 is a schematic diagram of another structure of an electric vehicle according to an embodiment of the present disclosure;
FIG. 5A shows a curve indicating a relationship between a negative electrode voltage and a specific capacity of a lithium battery during a two-stage discharge process according to an embodiment of the present disclosure;
FIG. 5B shows a curve indicating a relationship between a negative electrode voltage and a specific capacity of a lithium battery during a three-stage discharge process according to an embodiment of the present disclosure;
FIG. 6 is a schematic diagram of a structure of a lithium battery according to an embodiment of the present disclosure; and
FIG. 7 is a schematic diagram of a battery management system according to an embodiment of the present disclosure.

### DETAILED DESCRIPTION

During actual use of a new energy vehicle, there may be different mode requirements of endurance mileages, for example, a high-frequency daily mode to ensure that a battery has a long cycle life and suitably high energy density; a low-frequency holiday mode to ensure that the battery has higher energy density; and a lower-frequency emergency mode to allow the battery to be deeply discharged to provide an emergency endurance mileage and avoid a breakdown caused by unexpected power depletion. However, an existing lithium battery using a lithium metal or a silicon-based negative electrode material rarely can satisfy user requirements for different endurance mileage modes, for example, there are rarely holiday modes with high-energy density, and rarely can withstand deep discharge. In view of this, embodiments of the present disclosure provides a lithium battery and preparation method and control method therefor, a battery system, and an electric vehicle.

The following describes the technical solutions in embodiments of the present disclosure in detail with reference to the accompanying drawings.

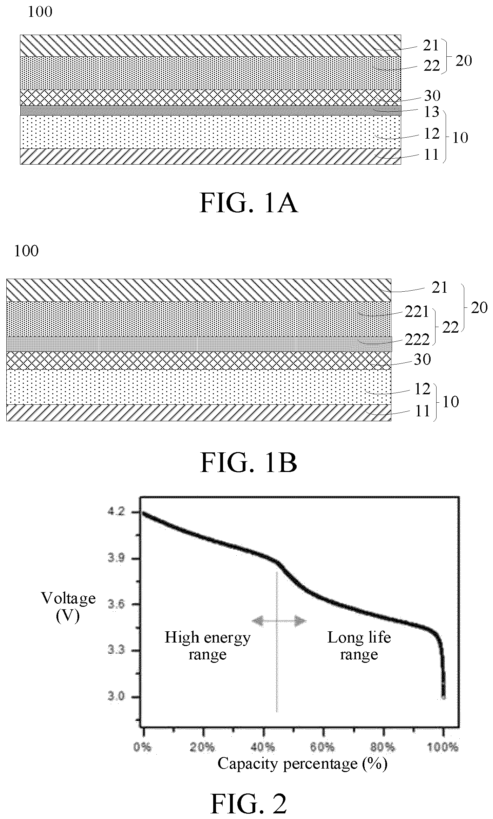

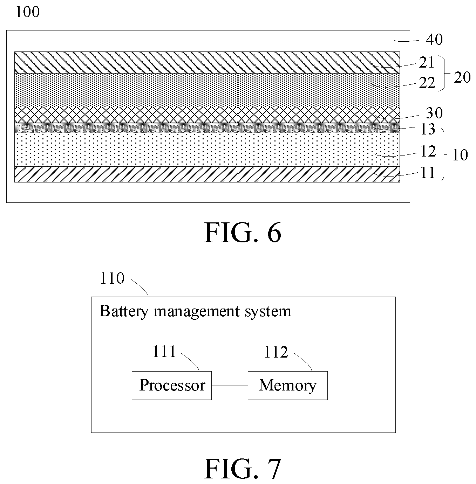

Refer to FIG. 1A, FIG. 1B, and FIG. 6. An embodiment of the present disclosure provides a lithium battery. In the lithium battery 100, a positive electrode and a negative electrode exist in the form of electrode sheets. In other words, the lithium battery 100 includes a negative electrode sheet 10, a positive electrode sheet 20, and further includes a separator 30 located between the positive electrode sheet 20 and the negative electrode sheet 10, and an electrolyte solution 40. Generally, the negative electrode sheet 10 includes a negative electrode current collector 11 and a negative electrode material layer 12 disposed on at least one side surface of the negative current collector 11. The negative electrode material layer 12 includes a lithium-silicon composite negative electrode active material, an optional conductive agent and binder, and the like. Similarly, the positive electrode sheet 20 includes a positive electrode current collector 21 and a positive electrode material layer 22 disposed on at least one side surface of the positive electrode current collector 21. The positive electrode material layer 22 includes a positive electrode active material, an optional conductive agent and binder, and the like. The positive electrode material layer 22 may be a single coating layer, or may be a superposing structure of two or more coating layers.

In the present disclosure, the lithium-silicon composite negative electrode active material includes a lithium element and a silicon element. When the lithium battery 100 is charged to a state of charge (SOC) of 100%, the lithium-silicon composite negative electrode active material includes a lithium-silicon alloy Li_{4.4}Si and elemental lithium.

That "the battery is charged to an SOC of 100%" refers to a state in which active lithium in the positive electrode of the battery is completely extracted, and accurately refers to that the positive electrode of the battery is charged to the SOC of 100%, that is, a state in which the battery is completely fully charged. When the lithium battery of the present disclosure is fully charged, a positive electrode capacity of the battery is fully exerted. In addition to allowing active lithium ions extracted from the positive electrode to be stored on the negative electrode in the form of a lithium-silicon alloy, the active lithium ions are further accepted to deposit on the negative electrode in the form of an elemental lithium. This part of "precipitated lithium" is active lithium, and can exert a capacity. In this way, energy density of the battery is very high. In addition, during discharging of the battery, this part of active elemental lithium exerts the capacity before the lithium-silicon alloy. Because the elemental lithium is precipitated at the negative electrode when the battery is charged to the SOC of 100%, an amount of a lithium-silicon alloy material LiₓSi (0<x≤4.4) used in the negative electrode material layer of the present disclosure is lower than that of a conventional negative electrode material, and a volume fraction of the lithium-silicon alloy material in the battery may be smaller, so that the energy density of the battery is improved. In addition, when the lithium battery is charged to a lower SOC, no elemental lithium is precipitated at the negative electrode of the battery, the lithium-silicon composite negative electrode active material does not include the elemental lithium, and a negative electrode end only exerts a capacity of the lithium-silicon alloy LiₓSi. The battery is charged and discharged at such a low SOC, so that the battery can have a long cycle life.

The positive electrode sheet of the battery in the present disclosure includes a first positive electrode active material and a second positive electrode active material. The first positive electrode active material includes a lithium element, and the second positive electrode active material includes elemental sulfur and/or a sulfur-containing compound. The first positive electrode active material is a conventional positive electrode active material that includes the lithium element and that is used in the lithium battery. That "the first positive electrode active material includes a lithium element" refers to that the first positive electrode active material includes the lithium element in an SOC of non 100% of the lithium battery. In other words, when the lithium ions are not completely extracted from the positive electrode sheet and migrated to the negative electrode sheet due to battery charging, the first positive electrode active material itself includes the lithium element. The second positive electrode active material is a sulfur-based active material used in a lithium-sulfur battery. Because the negative electrode of the battery in the present disclosure includes the foregoing lithium-silicon composite negative electrode active material, a particular amount of lithium (which is stored in the form of the lithium-silicon alloy LiₓSi) is pre-stored in the negative electrode, and the lithium pre-stored in the negative electrode is not sufficiently extracted in a regular discharge mode of the battery. In this way, in an emergency, the lithium pre-stored in the negative electrode and the second positive electrode active material in the positive electrode sheet may form a pair of primary batteries, to release this part of pre-stored lithium, to provide an emergency endurance mileage for a vehicle and the like, and to resolve a problem of a breakdown due to unexpected power depletion. It may be understood that, if the negative electrode active material of the lithium battery is a material without pre-stored lithium, such as graphite, elemental silicon, or a silicon oxide, the lithium battery does not have performance in withstanding over-discharge. Deep over-discharge may cause damage to a solid electrolyte membrane (SEI membrane) on a negative electrode side, dissolution of a copper-based current collector, and the like, and further cause battery gas production, cycle attenuation, an internal short circuit, and the like. In addition, the pre-stored lithium extracted from the negative electrode in an emergency mode causes a specific damage to a silicon negative electrode structure and interface, causes a side reaction, and the like. Therefore, the pre-stored lithium can only be used less frequently. This can effectively maintain an overall cycle life of the lithium battery.

Therefore, the lithium battery in this embodiment of the present disclosure can be charged in a state in which the negative electrode does not precipitate the elemental lithium during charging, so that the battery has a long cycle life. Further, the lithium battery may be charged in a state in which the negative electrode precipitates the elemental lithium during charging as needed, to exert higher energy density. In addition, during discharging of the lithium battery, the lithium-silicon composite negative electrode active material can release a specific capacity in the presence of the second positive electrode active material as needed. Therefore, this lithium battery can take into account a long cycle life, high energy density, and performance in withstanding over-discharge. This can meet requirements for different endurance mileage modes of the electric vehicle and resolve mileage anxiety of the electric vehicle.

In some implementations of the present disclosure, during discharging of the lithium battery, a lithium intercalation starting potential of the second positive electrode active material is less than or equal to a lithium intercalation cut-off potential V_{L} of the first positive electrode active material, and a lithium intercalation cut-off potential of the second positive electrode active material is greater than a potential V_{R} at which a transition metal element in the first positive electrode active material undergoes an irreversible reduction reaction. V_{L} is a potential of the first positive electrode active material at the end of a reversible reduction reaction of the transition metal element in the first positive electrode active material, and is also a discharge cut-off voltage of the lithium battery in the regular discharge mode. In a case that there is no second positive electrode active material, if a discharge voltage of the battery is less than V_{L}(in other words, when the battery is over-discharged), a structure of the first positive electrode active material may be damaged to a specific extent. This may greatly deteriorate cycle performance of the battery. However, in the present disclosure, the second positive electrode active material that satisfies the foregoing condition is introduced. In this way, it can be ensured that during discharging of the lithium battery, the second positive electrode active material participates in energy release only after the active lithium ions from the first positive electrode active material are released at the negative electrode, and the lithium intercalation starting potential of the second positive electrode active material is greater than V_{R} (generally, a lithium intercalation starting potential of a positive electrode material is greater than a lithium intercalation cut-off potential of the positive electrode material). In this way, the lithium ions extracted from the negative electrode can be better inhibited from over-reducing the transition metal element in the first positive electrode active material, to avoid destroy a positive electrode structure, causing battery gas production, and affecting subsequent battery cycles.

At a stage in which the second positive electrode active material participates in energy release of the lithium battery (in other words, when the lithium battery is over-discharged), the discharge voltage of the lithium battery drops from less than or equal to V_{L} to greater than or equal to V_{R}. Specifically, the discharge voltage of the lithium battery may drop from αV_{L} to βV_{R}. α is a constant greater than 0 and less than or equal to 1, such as 0.7, 0.8, 0.9, 0.95, or 1.0, and a constant closer to 1.0 is preferred. β is a constant greater than or equal to 1, such as 1.0, 1.1, 1.2, 1.3, 1.5, or the like. For example, if the first positive electrode active material is a lithium ternary oxide material (such as lithium nickel cobalt manganese oxide), V_{L} may be set to 2.5 V. If the first positive electrode active material is lithium iron phosphate or lithium iron manganese phosphate, V_{L} may be set to 2.0 V. For the lithium iron phosphate, during discharging of the battery, a potential during an irreversible reduction reaction (or referred to as over-reduction) of a transition metal element specifically refers to a voltage corresponding to reduction of +2-valent Fe ions to +1-valent or 0-valent Fe. It may be understood that, if the first positive electrode active material includes at least two (≥2) materials, V_{L} is the lowest value among lithium intercalation cut-off potentials of a number of first positive electrode active materials, and V_{R} is the highest value of a potential at which transition metal elements in the number of first positive electrode active materials undergo reduction reaction during discharging of the lithium battery.

In this embodiment of the present disclosure, the first positive electrode active material may include, but is not limited to, one or more of a transition metal oxide of lithium and lithium-containing phosphate. The transition metal oxide of lithium may include one or more of a lithium monooxide (such as lithium cobalt oxide, lithium manganese oxide, and lithium nickel oxide), a lithium binary oxide (such as lithium nickel manganese oxide, and lithium nickel cobalt oxide), a lithium ternary oxide (such as lithium nickel cobalt manganese oxide, and lithium nickel cobalt aluminum oxide), and a lithium multi-element oxide. The lithium-containing phosphate may include one or more of lithium iron phosphate, lithium manganese iron phosphate, and the like. The lithium-containing phosphate may be undoped or modified by doping, surface-coated or not surface-coated, and the like.

In an implementation of the present disclosure, the sulfur-containing compound includes one or more of metal sulfide and sulfided polyacrylonitrile (SPAN), and a metal element in the metal sulfides includes one or more of lithium (Li), molybdenum (Mo), copper (Cu), silver (Ag), titanium (Ti), zinc (Zn), manganese (Mn), iron (Fe), cobalt (Co), nickel (Ni), and the like. In some implementations, the second positive electrode active material may be one or more of S, Li₂S, Mo₆S₈, CuS, MnS, FeS₂, CoS₂, NiS₂, Fe_{0.5}Co_{0.5}S₂, and SPAN.

In this implementation of the present disclosure, a mass of the second positive electrode active material may be 1.6% to 22% of a mass of the first positive electrode active material. Introduction of an appropriate amount of the sulfur-based positive electrode active material helps ensure that the lithium battery has specific performance in withstanding over-discharge in an emergency situation in which power is almost exhausted, while not excessively increasing internal resistance of the positive electrode side of the lithium battery, and not excessively reducing energy density of the lithium battery in the regular discharge mode (that is, discharging to the voltage V_{L}).

In some implementations of the present disclosure, as shown in FIG. 1A, in the positive electrode sheet 20, the second positive electrode active material and the first positive electrode active material are located on the same positive electrode material layer 22. The second positive electrode active material and the first positive electrode active material may be evenly dispersed on the positive electrode material layer 22 having specific pores. The two materials are disposed on the same layer, so that it helps rapidly activate the second positive electrode active material to exert a capacity when the battery is over-discharged. In some other implementations of the present disclosure, as shown in FIG. 1B, the positive electrode sheet 20 includes a first positive electrode coating 221 including the first positive electrode active material and a second positive electrode coating 222 including the second positive electrode active material that are arranged in a stacked manner, and the second positive electrode coating 222 is away from the positive electrode current collector 21. The first positive electrode coating 221 and the second positive electrode coating 222 that are arranged in a stacked manner form the positive electrode material layer 22 on a side of the positive electrode sheet 20. A sulfur-based positive electrode active material having poor conductivity is arranged far away from the positive electrode current collector 21 to prevent the sulfur-based positive electrode active material from affecting transmission of electrons in the positive electrode sheet 20. The second positive electrode coating 222 may also include the first positive electrode active material.

In an implementation of the present disclosure, when the lithium battery 100 is charged to a level not exceeding a first SOC threshold, the lithium-silicon composite negative electrode active material does not include the elemental lithium. In this case, the lithium-silicon composite negative electrode active material includes a lithium-silicon alloy that may be represented by a chemical general formula LiₓSi. 0<x≤4.4. The "first SOC threshold" is a critical SOC value when the battery is charged to a point where the elemental lithium just begins to be precipitated at the negative electrode end, that is, an SOC value where the lithium-silicon alloy at the negative electrode of the battery is fully saturated with lithium ions (the lithium-silicon alloy is specifically Li_{4.4}Si), while not all active lithium ions are extracted from the positive electrode side.

When the battery is charged to a level below the first SOC threshold, the negative electrode of the battery does not precipitate lithium, the energy density of the lithium battery is not fully exerted, and the negative electrode end only exerts a capacity of the lithium-silicon alloy LiₓSi, so that volume expansion withstood by the negative electrode end is also weak, and a side reaction between the negative electrode and the electrolyte solution is minor. In this way, the lithium battery can undergo a number of charge-discharge cycles at relatively lower energy density (which is still significantly higher than that of a current battery using a graphite as a negative electrode), that is, has a longer cycle life. Therefore, the lithium battery provided in the present disclosure can take both the characteristics of "long cycle life" and "high energy density" into account, and the two characteristics may be freely selected with reference to a battery management system of the lithium battery, to meet a cycle requirement of the electric vehicle for a full life.

In an implementation of the present disclosure, when the lithium battery is charged to the SOC of 100%, the lithium-silicon composite negative electrode active material has an adjustable fraction of elemental lithium, and a mole fraction of the elemental lithium in the lithium-silicon composite negative electrode active material ranges from 15% to 95%, and may be specifically 18%, 20%, 22%, 25%, 30%, 35%, 40%, 42%, 45%, 50%, 55%, 60%, 65%, 70%, 75%, 80%, 85%, 90%, 92%, or the like. Correspondingly, the foregoing first threshold may be correspondingly adjusted based on the mole fraction of the elemental lithium, and a cycle life and a specific high energy density value of the lithium battery may be correspondingly adjusted. Optionally, the first SOC threshold may also range from an SOC of 15% to an SOC of 95%, and may be specifically an SOC of 18%, an SOC of 20%, an SOC of 22%, an SOC of 25%, an SOC of 30%, an SOC of 35%, an SOC of 40%, an SOC of 42%, an SOC of 45%, an SOC of 50%, an SOC of 55%, an SOC of 60%, an SOC of 65%, an SOC of 70%, an SOC of 75%, an SOC of 80%, an SOC of 85%, an SOC of 90%, an SOC of 95%, or the like.

FIG. 2 shows a discharge curve of a lithium battery using a lithium-silicon composite negative electrode active material. Refer to FIG. 2. The discharge curve of the lithium battery has a discharge inflection point, and the "discharge inflection point" refers to a minimum value of dV/dQ in the discharge curve. Before the inflection point, energy density of the battery (that is, a product of a battery voltage and a battery level) is relatively high, capacities of a lithium-silicon alloy Li_{4.4}Si and elemental lithium are exerted together, and the capacity of elemental lithium is exerted first. After the inflection point, it corresponds to that an SOC of the battery during charging is lower, and only a capacity of a lithium-silicon alloy LiₓSi is exerted on a negative electrode side, the energy density of the battery becomes lower, but a cycle life of the battery is longer.

In some implementations of the present disclosure, in a state in which the lithium battery 100 is charged to the SOC of 100%, the lithium-silicon composite negative electrode active material includes the elemental lithium and the lithium-silicon alloy Li._{4.4}Si. In this case, the lithium-silicon composite negative electrode active material includes only a lithium element and a silicon element (in other words, the lithium-silicon composite negative electrode active material may be formed by pressing elemental silicon and lithium metal in situ). In this way, a mole fraction of the lithium-silicon alloy Li_{4.4}Si in the lithium-silicon composite negative electrode active material ranges from 5% to 85%.

The lithium battery in the present disclosure uses the foregoing lithium-silicon composite negative electrode active material including the elemental lithium and the Li_{4.4}Si when fully charged, so N/P (a ratio of a negative electrode capacity to a positive electrode capacity of the lithium battery) of the lithium battery is less than 1. In this way, a volume fraction and a mass fraction of the negative electrode active material in the lithium battery may be small, so that the energy density of the battery is significantly improved. The negative electrode capacity corresponding to N refers to a negative electrode capacity when a negative electrode is just intercalated with lithium to form the lithium-silicon alloy Li_{4.4}Si and no elemental lithium is precipitated, that is, a negative electrode capacity corresponding to the foregoing first SOC threshold.

Optionally, in the lithium battery 100, a volume ratio of the foregoing lithium-silicon composite negative electrode active material to a positive electrode active material ranges from 0.1375 to 0.825. A ratio of a thickness of the positive electrode sheet 20 to a thickness of the negative electrode sheet 10 ranges from 8:1 to 4:3. In this way, it can be better ensured that the N/P ratio of the lithium battery is less than 1, facilitating improvement of the energy density of the battery.

In some implementations of the present disclosure, a surface of the negative electrode material layer 12 further includes a protective layer 13 (refer to FIG. 1A), or a surface of the lithium-silicon composite negative electrode active material includes a protective layer 13. The protective layer 13 includes a polymer matrix and a lithium salt. The protective layer 13 is hardly dissolved in the electrolyte solution 40 of the battery. The protective layer 13 can guide a flow of lithium ions, control the lithium ions to be evenly deposited on a surface of the negative electrode sheet 10, effectively inhibit a growth of lithium dendrites on the surface of the negative electrode sheet 10 and prevent the lithium dendrites from piercing the separator to cause an internal short circuit of the battery. In particular, when the lithium battery is charged to a high SOC where the elemental lithium can be precipitated at the negative electrode, the protective layer 13 can reduce a side effect of the precipitation of the elemental lithium, effectively inhibit a side reaction of the elemental lithium with the electrolyte solution 40, and improve cycle performance and safety performance.

Specifically, the polymer matrix may include one or more of polyethylene oxide (PEO), polysiloxane, polyvinylidene fluoride, polymethyl methacrylate, and polyacrylonitrile and a derivative and copolymer thereof, but is not limited thereto. The lithium salt has ion conductivity and may include one or more of lithium nitrate (LiNO₃), lithium sulfide (Li₂S), lithium chloride (LiCl), lithium bromide (LiBr), lithium iodide (LiI), lithium fluoride (LiF), lithium phosphate (Li₃PO₄), and the like. In some implementations, the protective layer may further include an inorganic filler, to increase lithium ion transmission channels, improve a mechanical property, and the like. The inorganic filler may be at least one of an oxide (such as silicon dioxide, aluminum oxide, and titanium dioxide), a hydroxide (such as aluminum hydroxide and magnesium hydroxide), and a salt.

The electrolyte solution 40 of the lithium battery 100 generally includes a solvent and a second lithium salt. In this implementation of the present disclosure, the solvent in the electrolyte solution 40 of the lithium battery 100 is a non-carbonate solvent. Specifically, the solvent in the electrolyte solution 40 includes an ether solvent, and specifically includes at least one of a non-halogenated ether solvent and a fluorinated ether solvent. A side reaction between a carbonate solvent and a lithium metal negative electrode is fast, and it is easy to generate sharp lithium dendrites at the battery negative electrode, which may pierce the battery separator to cause the battery to spontaneously combust. The ether solvent is highly compatible with the lithium metal, and a side reaction between the ether solvent and the lithium metal are much more minor than a side reaction between the carbonate solvent and the lithium metal. The ether solvent can effectively inhibit consumption of active lithium during a cycle process, while improving uniformity and density of lithium ion deposition, avoiding formation of sharp lithium dendrites that pierce the battery separator and cause a safety risk.

Optionally, the non-halogenated ether solvent may be selected from one or more of ethylene glycol dimethyl ether, ethylene glycol diethyl ether, ethylene glycol dipropyl ether, ethylene glycol dibutyl ether, diethylene glycol dimethyl ether, triethylene glycol dimethyl ether, tetraethylene glycol dimethyl ether, dipropylene glycol dimethyl ether, tripropylene glycol monomethyl ether, diethylene glycol dimethyl ether, diethylene glycol diethyl ether, diethylene glycol dibutyl ether, triethylene glycol dimethyl ether, tetraethylene glycol dimethyl ether, and the like, but is not limited thereto. Optionally, the fluorinated ether solvent may be selected from one or more of 1,1,2,2-tetrafluoroethyl ether, 1,1,2,2-tetrafluoroethyl-2,2,3,3-tetrafluoropropyl ether, hexafluoroisopropyl ether, tetrafluoroethyl-tetrafluoropropyl ether, 2,2,2-trifluoroethyl ether, 1,1,2,2-tetrafluoroethyl-2,2,2-trifluoroethyl ether, difluoromethyl-2,2,3,3-tetrafluoropropyl ether, 2,2,3,3,3-pentafluoropropyl methyl ether, 1,1,2,3,3,3-hexafluoropropyl ethyl ether, 1,1,2,3,3,3-pentafluoropropyl difluoromethyl ether, 1,1,2,2-tetrafluoroethyl-2,2,3,3-tetrafluoropropyl ether, 1H, 1H,5H-octafluoropentyl-1,1,2,2-tetrafluoroethyl ether and bis(2,2,2-trifluoroethyl) ether, and the like, but is not limited thereto.

The second lithium salt in the electrolyte solution 40 may be selected from one or more of lithium bis(fluorosulfonyl)imide (LiN(SO₂F)₂), lithium bis(trifluoromethylsulfonyl)imide (Li(CF₃SO₂)₂N), lithium bis(perfluoroethylsulfonyl)imide (Li(C₂F₅SO₂)₂N), lithium bis(oxalatoborate) (LiB(C₂O₄)₂, LiBOB), lithium trifluoromethylsulfonate (LiCF₃SO₃), lithium perfluorobutylsulfonate (LiC₄F₉SO₃), tris(trifluoromethylsulfonyl)methyl lithium LiC(CF₃SO₂)₃, and the like, but is not limited thereto.

In this implementation of the present disclosure, the lithium-silicon composite negative electrode active material in the negative electrode sheet 10 may be formed by pressing a silicon-based material and the lithium metal in situ. The silicon-based material may include, but is not limited to, one or more of elemental silicon, a silicon oxide, a silicon-based non-lithium alloy (such as a silicon-germanium alloy, a silicon-magnesium alloy, a silicon-copper alloy, and a silicon-iron alloy), and the like.

In some implementations, the negative electrode material layer 12 including the lithium-silicon composite negative electrode active material is formed by performing in-situ hot pressing on a lithium thin film (such as a lithium foil or a lithium thin film attached to a release film) and an initial negative electrode material layer including the silicon-based material. In this case, a lithium element of the lithium thin film may be completely transferred to the initial negative electrode material layer and react in situ with the silicon-based material to form the lithium-silicon composite negative electrode active material. In some other implementations, the lithium-silicon composite negative electrode active material is formed by in-situ pressing a mixture of a lithium metal powder and the silicon-based material (which may be a wet slurry or a dry powder). In this case, the negative electrode material layer 12 may be formed by coating a mixed slurry of the silicon-based material and the lithium powder on the negative electrode current collector, and after drying and pressing, in-situ reaction on the negative electrode current collector to form a negative electrode material layer including the lithium-silicon composite negative electrode active material. Alternatively, a mixture of the lithium powder and the silicon-based material is in-situ pressed to form the lithium-silicon composite negative electrode active material, a slurry including the lithium-silicon composite negative electrode active material is coated, dried, and pressed to form a negative electrode sheet.

When the negative electrode material layer 12 having the protective layer 13 on the surface needs to be formed, in-situ hot pressing may be performed on the lithium thin film attached to the release film and a silicon-based material layer with a protective layer on a surface (the silicon-based material layer is the foregoing initial negative electrode material layer, which includes a silicon-based material and an optional binder and a conductive agent). In another implementation of the present disclosure, the negative electrode material layer 12 having the protective layer 13 on the surface may alternatively be obtained by forming a protective layer on the surface of the negative electrode material layer 12 including the lithium-silicon composite negative electrode active material.

In the present disclosure, the negative electrode current collector 11 and the positive electrode current collector 21 are independently selected from an elemental metal foil or an alloy foil. For example, the negative electrode current collector 11 may be specifically copper foil, and the positive electrode current collector 21 may be specifically aluminum foil. The binder and the conductive agent in the negative electrode sheet 10 and the positive electrode sheet 20 are general materials in the battery field. For example, each conductive agent may be independently selected from one or more of conductive carbon black (such as acetylene black and Ketjen black), a carbon nanotube, a carbon fiber, graphite, and furnace black. Each binder may be independently selected from one or more of styrene-butadiene rubber (SBR), polyvinylidene fluoride (PVDF), polytetrafluoroethylene (PTFE), polyvinyl alcohol (PVA), polyacrylonitrile (PAN), polyimide (PI), polyacrylic acid (PAA), polyolefins (such as polyethylene and polypropylene), sodium carboxymethyl cellulose (CMC), sodium alginate, and the like.

The lithium battery provided in this embodiment of the present disclosure includes the lithium-silicon composite negative electrode active material, so that a fraction of the lithium-silicon composite negative electrode active material in the lithium battery may be low, facilitating increasing of the energy density of the battery. Especially, precipitation of the elemental lithium at a high SOC can increase the energy density of the battery. When the battery is charged to a low SOC, the negative electrode does not precipitate lithium, and has better cycle performance. In addition, the lithium-silicon composite negative electrode active material and a sulfur-based second positive electrode active material is combined, to improve performance in withstanding over-discharge of the lithium battery and provide an emergency endurance mileage. Therefore, the lithium battery according to this embodiment of the present disclosure can meet multi-orientation requirements for the electric vehicle, and deeply alleviate mileage anxiety.

An embodiment of the present disclosure further provides a preparation method for the foregoing lithium battery, including the following steps:
S01: A silicon-based material layer is formed on a negative electrode current collector, and hot pressing is performed on lithium metal and the silicon-based material layer in an inert atmosphere, so that the lithium metal and the silicon-based material react in situ to form a negative electrode material layer including a lithium-silicon composite negative electrode active material, to obtain a negative electrode sheet.
S02: A positive electrode sheet is provided, the positive electrode sheet including a first positive electrode active material and a second positive electrode active material, where the first positive electrode active material includes a lithium element, and the second positive electrode active material includes elemental sulfur and/or a sulfur-containing compound.
S03: The negative electrode sheet and the positive electrode sheet are assembled into the lithium battery, where when the lithium battery is charged to an SOC of 100%, the lithium-silicon composite negative electrode active material includes a lithium-silicon alloy Li_{4.4}Si and elemental lithium, and a mole fraction of the elemental lithium in the lithium-silicon composite negative electrode active material ranges from 15% to 95%.

In step S01, the silicon-based material layer may be formed on one side surface or two opposite side surfaces of the negative electrode current collector. Correspondingly, the negative electrode material layer including the lithium-silicon composite negative electrode active material is also formed on one side surface or two opposite side surfaces of the negative electrode current collector. For a forming principle of the negative electrode material layer, refer to the foregoing descriptions of the present disclosure. The silicon-based material layer may be formed by coating, drying, and rolling a mixed slurry including a silicon-based material, a conductive agent, and a binder. The silicon-based material may include, but is not limited to, elemental silicon, a silicon oxide, a silicon-based non-lithium alloy (such as a silicon-germanium alloy, a silicon-magnesium alloy, a silicon-copper alloy, and a silicon-iron alloy), another silicon compound (such as fluorine-containing silicon oxide, lithium hexafluorosilicate, silicon carbide, and silicon boride), and the like.

In the negative electrode material layer prepared in step S01, the lithium-silicon composite negative electrode active material includes a lithium-silicon alloy LiₓSi, and does not include the elemental lithium. x≤4.4. When the used silicon-based material includes an element other than silicon (such as oxygen and fluorine), the lithium-silicon composite negative electrode active material also includes the element accordingly. For example, when the used silicon-based material is the elemental silicon, and the battery is charged to a level below the foregoing first SOC threshold, the lithium-silicon composite negative electrode active material is only a lithium-silicon alloy LiₓSi. When the lithium battery is charged to the SOC of 100%, the lithium-silicon composite negative electrode active material only includes the elemental lithium and the Li_{4.4}Si. For example, when the silicon-based material is the silicon oxide, and the battery is charged to a level below the foregoing first SOC threshold, the lithium-silicon composite negative electrode active material may include at least one of Li₂O, Li₂SiO₃, and the like, and a lithium-silicon alloy LiₓSi (0<x<4.4). When the lithium battery is charged to the SOC of 100%, the lithium-silicon composite negative electrode active material includes at least one of Li₂O, Li₂SiO₃, and the like, the Li_{4.4}Si, and the elemental lithium.

In some implementations of the present disclosure, in S01, before hot pressing is performed on the lithium metal and the silicon-based material layer in an inert atmosphere, a protective layer may be formed on a surface of the silicon-based material layer. In this way, when in-situ hot pressing is performed on the silicon-based material layer having the protective layer on the surface and the lithium metal, under hot pressing, the protective layer and the silicon-based material layer present a porous structure, and the lithium element of the lithium metal can enter the silicon-based material layer and react in-situ with the silicon-based material to form the lithium-silicon composite negative electrode active material, and finally form the negative electrode material layer having a protective layer. The negative electrode material layer includes the lithium-silicon composite negative electrode active material. In some other implementations of the present disclosure, the protective layer may alternatively be formed on a surface of the negative electrode material layer after the negative electrode material layer is formed. For a composition of the protective layer, refer to the foregoing descriptions of the present disclosure. The protective layer may be formed by liquid coating, vapor deposition, electrodeposition, or the like.

In some implementations of the present disclosure, the lithium metal used for hot-pressing with the silicon-based material layer may be a lithium thin film, specifically lithium foil, or a lithium thin film attached to a release film, and optionally the lithium thin film attached to the release film to avoid loss of lithium elements due to direct contact between the lithium metal and a hot pressing device.

In step S02, a preparation method for the used positive electrode sheet is not limited. In some implementations, the positive electrode sheet may be prepared by the following method: A mixed slurry including the first positive electrode active material, the conductive agent, and the binder are coated on a positive electrode current collector, and after drying, an initial positive electrode material layer is formed on the positive electrode current collector; the second positive electrode active material is evaporated on a surface of the initial positive electrode material layer to obtain a positive electrode material layer including the first positive electrode active material and the second positive electrode active material; and then the positive electrode material layer is pressed to obtain the positive electrode sheet. In some other implementations, the positive electrode sheet may alternatively be prepared by coating a mixed slurry including the first positive electrode active material, the second positive electrode active material, the conductive agent, and the binder on the positive electrode current collector, followed by drying and pressing.

In some other implementations of the present disclosure, the first positive electrode active material and the second positive electrode active material are not always on a same layer. For example, the positive electrode sheet 20 shown in FIG. 1B may be obtained by using the following method: At least one side surface of the positive current collector 21 are coated with a first positive electrode coating slurry including the first active material and a second positive electrode coating slurry including the second positive electrode active material in sequence, and after drying and pressing, the first positive electrode coating 221 and the second positive electrode coating 222 are arranged in a stacked manner in sequence on at least one side surface of the positive electrode current collector 21, to obtain the positive electrode sheet.

In step S03, an assembly process of the lithium battery specifically includes: The positive electrode sheet, a separator, and the negative electrode sheet are stacked in sequence to form a bare battery core; the bare battery core is placed in a battery casing, an electrolyte solution is injected, and the battery casing is sealed to obtain the lithium battery.

The preparation method for the lithium battery provided in this embodiment of the present disclosure has simple process and is easy to control.

The control method for the lithium battery provided in this embodiment of the present disclosure may specifically include a charging control method and a discharging control method.

Specifically, the charging control method for the lithium battery includes:
A charge cut-off voltage for charging the lithium battery is controlled to be Vₕ when an instruction indicating that the lithium battery enters a first preset mode is received.

Vₕ>Vₛ. At Vₛ, a negative electrode sheet of the lithium battery does not precipitate elemental lithium. When a charging voltage of the lithium battery is between Vₛ and Vₕ, the lithium-silicon composite negative electrode active material includes the elemental lithium.

The "instruction indicating that the lithium battery enters a first preset mode" may be an instruction indicating the lithium battery to enter the first preset mode, or may be a signal for enabling a controller to control the lithium battery to enter the first preset mode. The first preset mode is a mode in which the lithium battery is charged, and specifically refers to charging to the SOC of 100%. In this case, the negative electrode includes the Li_{4.4}Si and the elemental lithium. It may be understood that, if the lithium battery is needed to subsequently exhibit a high energy density characteristic, the lithium battery is charged in the first preset mode.

When the charging voltage of the lithium battery is Vₛ, the lithium-silicon composite negative electrode active material does not include the elemental lithium. When the charging voltage is greater than Vₛ, the lithium-silicon composite negative electrode active material includes the elemental lithium. It can be learned that Vₛ is a critical battery voltage when the lithium battery is charged to a point where the elemental lithium just begins to be precipitated at the negative electrode (that is, when the battery is charged to a level reaching the first SOC threshold). Vₕ is also an upper limit charge voltage that the lithium battery can withstand. Vₕ is a battery voltage when the lithium battery is completely fully charged (that is, charged to the SOC of 100%), that is, a cut-off voltage corresponding to a maximum capacity that can be exerted by the positive electrode, and may also be referred to as a rated voltage.

When the lithium battery is needed to have a long cycle life characteristic, no elemental lithium is precipitated at the negative electrode of the lithium battery, in other words, the lithium-silicon composite negative electrode active material does not include the elemental lithium. At the charge cut-off voltage Vₛ, the lithium battery is not completely charged, but is only charged to a relatively low SOC, so that volume expansion withstood by the negative electrode end is also weak, and a side reaction between the negative electrode and the electrolyte solution is minor. Therefore, the lithium battery can withstand a large number of charge and discharge cycles, that is, has a longer cycle life. When the lithium battery is needed to exhibit the high energy density characteristic, the charge cut-off voltage of the lithium battery is Vₕ. During discharging of the battery, when the discharge voltage of the battery is between Vₕ and Vₛ, the negative electrode generally includes the lithium-silicon alloy Li_{4.4}Si and a specific amount of elemental lithium. The energy density exhibited by the battery is very high. When a lithium battery charged to Vₕ is used to provide power (that is, when the lithium battery is discharged), an endurance mileage that the lithium battery can provide is also correspondingly longer. In this way, the lithium battery can exhibit the long cycle life characteristic and the high energy density characteristic as needed, and can meet both a high-frequency daily endurance mileage requirement and a low-frequency long endurance mileage requirement.

In some implementations of the present disclosure, during charging of the lithium battery, the charge cut-off voltage for charging the lithium battery is controlled to be Vₛ when an instruction indicating that the lithium battery enters a second preset mode is received. The "instruction indicating that the lithium battery enters a second preset mode" may be an instruction indicating the lithium battery to enter the second preset mode, or may be a signal for enabling the controller to control the lithium battery to enter the second preset mode. The second preset mode is another mode when the lithium battery is charged, and specifically refers to charging to Vₛ where no elemental lithium is precipitated at the negative electrode sheet. It may be understood that, if the lithium battery is needed to exhibit a long cycle life characteristic, the lithium battery is charged in the second preset mode. The second preset mode is also a most commonly used charging mode of the lithium battery.

In some implementations of the present disclosure, during charging of the lithium battery, when the charging voltage of the lithium battery reaches Vₛ, the lithium battery is controlled to continue to be charged to Vₕ when the instruction indicating that the lithium battery enters the first preset mode is received, and charging of the lithium battery is controlled to be stopped when the instruction indicating that the lithium battery enters the first preset mode is not received. In this case, whether to charge the lithium battery to Vₕ is determined, executed, and the like when the lithium battery is charged to Vₛ. This is more helpful to reduce a quantity of times of charging with Vₕ as the charge cut-off voltage, ensuring a longer overall service life of the lithium battery.

In addition, whether the lithium battery is needed to exhibit the high energy density characteristic so that the lithium battery enters the first preset mode for charging can be remotely enabled by a user during charging, or mode selection setting may be performed before charging. This is described in detail below in the present disclosure.

In the present disclosure, when the lithium battery is needed to exhibit the long cycle life characteristic, the charge cut-off voltage Vₛ for charging the lithium battery each time may be the same or different. Vₛ may not be a fixed value, and may be determined based on the quantity of times the lithium battery is charged with the charge cut-off voltage Vₕ, to narrow a gap between Vₛ and Vₕ, so as to maximize energy density of the battery with Vₛ as the charge cut-off voltage without damaging the long cycle life of the battery, thereby ensuring that the lithium battery has a long endurance mileage with a long life characteristic.

In the present disclosure, the discharging control method for the lithium battery includes:
The lithium battery is controlled to be discharged to a first discharge threshold voltage V₁ when an instruction indicating that the lithium battery enters a third preset mode is received. V₁ is greater than or equal to a potential V_{R} at which a transition metal element in the first positive electrode active material undergoes an irreversible reduction reaction during discharging.

The "instruction indicating that the lithium battery enters a third preset mode" may be an instruction indicating the lithium battery to enter the third preset mode, or may be a signal for enabling the controller to control the lithium battery to enter the third preset mode. The third preset mode is a mode in which the lithium battery is discharged. If the second positive electrode active material is needed to exert a capacity during discharging of the battery, the lithium battery is discharged in the third preset mode. Because a discharge voltage U of the lithium battery is low (that is, power of the lithium battery is extremely low) when the second positive electrode active material exerts the capacity, the third preset mode may be referred to as an "emergency discharge mode".

Generally, when the discharge voltage U of the lithium battery is low, a battery management system of the lithium battery pushes an instruction on whether to enable the third preset mode (that is, an instruction on whether the second positive electrode active material is needed to exert the capacity) to an electric vehicle (for example, an electric car) using the lithium battery. After receiving a feedback instruction from the electric vehicle, the battery management system may control the lithium battery to discharge to V₁ based on the feedback instruction confirming enabling of the third preset mode, so that the second positive electrode active material exerts the capacity. The feedback instruction of the electric vehicle may be issued by a user of the electric vehicle (for example, the electric car) by pressing a mode button of a vehicle operation panel. When the second positive electrode active material exerts the capacity, the discharge voltage of the lithium battery is reduced from a lithium intercalation starting potential of the second positive electrode active material to V₁. In this way, during the second positive electrode active material exerting the capacity, it can prevent the transition metal element in the first positive electrode active material from being excessively reduced and a structure of the transition metal element from being damaged, to avoid generation of gas in the battery, affecting of a subsequent battery cycle, and the like.

In addition, if the feedback instruction received by the battery management system is not enabling the third preset mode, that is, not needing the second positive electrode active material to exert the capacity, the battery management system controls the discharge cut-off voltage for discharging the lithium battery to be V_{L}. Further, if the discharge voltage of the lithium battery is V_{L} when the feedback instruction of not enabling the third preset mode is received, the lithium battery is controlled to stop discharging. If the discharge voltage of the lithium battery is greater than V_{L} when the feedback instruction of not enabling the third preset mode is received, the lithium battery continues to be discharged to V_{L}, so that the first positive electrode active material is fully intercalated with lithium, to provide energy in a regular discharge mode to the electric vehicle.

In some implementations of the present disclosure, when a voltage of the lithium battery during discharging is close to a second discharge threshold voltage V₂, the lithium battery is controlled to continue to be discharged to the first discharge threshold voltage V₁ when the instruction indicating that the lithium battery enters the third preset mode is received. V₂ is equal to a lithium intercalation cut-off potential V_{L} of the first positive electrode active material. For a definition of V₁, refer to the foregoing descriptions. When the lithium battery enters the third preset mode, the second positive electrode active material exerts the capacity to enable the lithium battery to continue to output power.

Generally, when the discharge voltage of the lithium battery is low, the second positive electrode active material of the lithium battery needs to be used to exert the capacity. In this way, enabling frequency of the emergency discharge mode for exerting the capacity of the second positive electrode active material can be reduced. A process in which the second positive electrode active material exerts the capacity may also be referred to as an over-discharge process or a deep discharge process of the lithium battery. The voltage U of the lithium battery during discharging may be obtained by using a collection module in the battery management system of the lithium battery. The foregoing term "close to" may be understood as fluctuating around V₂, for example, less than or equal to V₂, or slightly greater than V₂. In some embodiments, a relationship between the discharge voltage U and V₂ can be determined by collecting a number of pieces of discharge voltage data of the lithium battery in a short time period. For example, the discharge voltage of the lithium battery is collected every 10 seconds within 30 seconds. If three pieces of collected real-time discharge voltage data are all less than or equal to V₂, impact of a battery operation fluctuation can be ruled out, and it is considered that the battery power is basically exhausted. It can be considered whether to enable the emergency discharge mode. For example, the battery management system may push an instruction on whether to enable the emergency discharge mode to the electric vehicle using the lithium battery.

V₂ may be set based on the lithium intercalation cut-off potential V_{L} of the specific first positive electrode active material. V_{L} is also a discharge cut-off voltage of the lithium battery in the regular discharge mode. As described above in the present disclosure, if the first positive electrode active material is a lithium ternary oxide material (such as lithium nickel cobalt manganese oxide), V₂ may be set to 2.5 V. If the second positive electrode active material is lithium iron phosphate or lithium iron manganese phosphate, V₂ may be set to 2.0 V. If the first positive electrode active material includes at least two different materials, V₂ may be set based on a material with the lowest lithium intercalation cut-off potential, for example, if the first positive electrode active material includes both lithium iron phosphate and lithium nickel cobalt manganese oxide, V₂ may be set to 2.0 V.

Vi may also be referred to as a discharge cut-off voltage of the lithium battery in the emergency discharge mode. V₁ may be β times V_{R}. β is a constant greater than or equal to 1, such as 1.0, 1.1, 1.2, 1.3, or 1.5. When the first positive electrode active material includes one or more materials, V₁ is determined based on a material with the highest potential at which a transition metal element in the first positive electrode active material undergoes an irreversible reduction reaction, and V_{R} may be the highest value of a potential during an irreversible reduction reaction of the transition metal element in a number of first positive electrode active materials.

It should be noted that, for the discharging control method for the foregoing lithium battery, no attention is paid to a charging manner of the lithium battery before being discharged. For example, regardless of the charge cut-off voltage during charging of the lithium battery is Vₛ or V_{H}, attention is paid only to whether the second positive electrode active material is needed to exert the capacity during discharging. If it is needed, the discharge cut-off voltage of the battery is controlled to be V₁.

An embodiment of the present disclosure further provides a battery management system 110 for the foregoing lithium battery. Refer to FIG. 7. The battery management system 110 includes a memory 112 and a processor 111. The memory 112 stores program instructions, and the processor 111 is adapted to load the program instructions and perform the charging control method and/or the discharging control method described in the foregoing embodiments of the present disclosure.

An embodiment of the present disclosure further provides a battery system 250 for an electric vehicle. The battery system 250 includes a battery management system 110 and a number of lithium batteries 100 according to the first aspect of the present disclosure. The foregoing lithium battery 100 may be referred to as a "cell".

The battery system 250 may be used in an electric vehicle 300, and may communicate with a driving part 301 of the electric vehicle 300. The electric vehicle 300 is, for example, an electric car, an electric motorcycle, an electric bicycle, or an electric ship. When the electric vehicle 300 is an electric car, the driving part 301 of the electric vehicle 300 may be an electric motor.

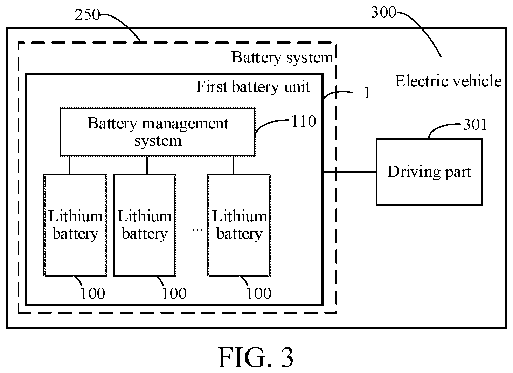

In some implementations, the battery system 250 may include at least one battery unit, and each first battery unit includes one or more of the foregoing lithium batteries 100 and one battery management system 110. Refer to FIG. 3. A battery system 250 of an electric vehicle 300 includes only a first battery unit 1. The first battery unit 1 includes a battery management system 110 and a number of lithium batteries 100. The first battery unit 1 may be a "module-less" battery pack or a "module-equipped" battery pack. When the first battery unit 1 is the "module-equipped" battery pack, the number of lithium batteries 100 may be connected in series, in parallel, or a combination thereof to form a modular battery pack. The battery management system 110 is configured to monitor status information of each lithium battery 100, such as a voltage, a current, internal resistance, and a temperature, and control a charging/discharging status of each lithium battery 100.

When the battery system 250 of the electric vehicle 300 includes only the first battery unit 1, the lithium battery may be controlled to be fully charged or charged to a lower SOC during charging based on an actual endurance mileage requirement for the electric vehicle. This can meet a long endurance mileage requirement when necessary and ensure a long cycle life under a short endurance mileage requirement.

Specifically, the battery management system 110 is configured to control, before or during charging of the lithium battery 100 and when it is learned that the electric vehicle 300 is to operate in a first mode, a charge cut-off voltage of the lithium battery 100 to be Vₕ. Vₕ is an upper limit charge voltage that the lithium battery can withstand, and Vₕ>Vₛ. At Vₛ, no elemental lithium is precipitated at the negative electrode of the lithium battery. When a voltage of the lithium battery 100 is between Vₛ and Vₕ, a lithium-silicon composite negative electrode active material of the lithium battery 100 includes Li_{4.4}Si and the elemental lithium.

It may be understood that, when the electric vehicle operates in the first mode, the lithium battery 100 charged to Vₕ discharges to provide power for the electric vehicle, and the battery exhibits high energy density. Specifically, the elemental lithium and the Li_{4.4}Si jointly provide energy, and the electric vehicle 300 has a long endurance mileage. The first mode may be referred to as a "long endurance mode". In addition, in this case, the negative electrode of the lithium battery precipitates the elemental lithium, which has specific impact on a cycle life of the lithium battery. Therefore, operation frequency of the first mode is relatively low. It is usually needed to activate the first mode when driving long distances during holidays. The first mode may also be referred to as a "holiday mode".

In this implementation of the present disclosure, the battery management system 110 is configured to control, before or during charging of the lithium battery 100 and when it is learned that the electric vehicle 300 is to operate in a second mode, the charge cut-off voltage for charging the lithium battery to be V_{S}. A meaning of Vₛ is as described above in the present disclosure. At Vₛ, no elemental lithium is precipitated at the negative electrode of the lithium battery 100, and the lithium battery 100 has a long cycle life characteristic. An endurance mileage of the electric vehicle 300 in the second mode is less than an endurance mileage of the electric vehicle 300 in the first mode.

The "endurance mileage in the second mode" accurately refers to an endurance mileage provided by discharging of the first battery unit 1 including one or more lithium batteries charged to Vₛ for the electric vehicle 300. The "endurance mileage in the first mode" accurately refers to an endurance mileage provided by discharging of the first battery unit 1 including one or more lithium batteries charged to Vₕ for the electric vehicle 300. Because Vₕ>Vₛ, the endurance mileage of the electric vehicle 300 in the second mode is less than the endurance mileage of the electric vehicle 300 in the first mode. The second mode may be referred to as a "short endurance mode", and the first mode may be referred to as the "long endurance mode". For example, the endurance mileage of the electric vehicle in the second mode may be 400 km to 800 km, and the endurance mileage of the electric vehicle in the first mode may be 800 km to 1200 km. In addition, the second mode is a mode that the electric vehicle uses more frequently, for example, for daily short-distance commuting, and may also be referred to as a "daily mode".

When it is learned that the electric vehicle needs to operate in the short endurance mode, the first battery unit 1 controls, during charging of the electric vehicle, the lithium battery to be charged to a lower SOC instead of the upper limit charge voltage Vₕ. This ensures that no elemental lithium is precipitated at the negative electrode of the lithium battery, to help the lithium battery in the first battery unit exert the long cycle life characteristic. When it is learned that the electric vehicle needs to operate in the long duration mode, the lithium battery is charged to the SOC of 100%, to ensure that the first battery unit can exert a high energy density characteristic. In this way, although a cycle life of the lithium battery in the "long endurance mode" is not as long as a cycle life in the "short endurance mode", because the "long endurance mode" is used less frequently, the first battery unit of the electric vehicle as a whole can have more low SOC cycles and more full charge cycles, and provide the electric vehicle with a longer endurance mileage when needed. In other words, energy density of the lithium battery 100 in the second mode is less than energy density of the lithium battery 100 in the first mode. A cycle life of the lithium battery 100 in the second mode is longer than a cycle life of the lithium battery 100 in the first mode.

During charging of the lithium battery, if the battery management system 110 does not receive an instruction for the electric vehicle 300 to enable the first mode of operation, the charge cut-off voltage for charging the lithium battery 100 is Vₛ by default. During or before charging of the lithium battery 100, if the battery management system 110 receives the instruction for the electric vehicle 300 to activate the first mode of operation, the charge cut-off voltage for charging the lithium battery is controlled to be Vₕ.

For the "instruction for the electric vehicle 300 to enable the first mode of operation", mode selection setting may be performed before charging, or the instruction may be remotely enabled during charging. Specifically, the instruction may be issued by a user of the electric vehicle by pressing a mode button of a vehicle operation panel, or by a user remotely operating a smart terminal that can communicate with the vehicle (for example, when a charging voltage of the lithium battery is close to Vₛ, an intelligent network system of the vehicle pushes information such as "whether to enable the long endurance mode" to the user).

In this implementation of the present disclosure, the battery management system 110 is further configured to control, before or during discharging of the first battery unit 1 and when it is learned that the electric vehicle 300 is to operate in a third mode in which a second positive electrode active material of the lithium battery 100 can exert a capacity, the lithium battery 100 to be discharged to a first discharge threshold voltage V₁. V₁ is greater than or equal to a potential of a first positive electrode active material of the lithium battery 100 during an irreversible reduction reaction of a transition metal element in the first positive electrode active material of the lithium battery 100.

In the third mode, the electric vehicle 300 needs the second positive electrode active material of the lithium battery 100 to exert the capacity to provide power for the electric vehicle 300. In this case, the battery is relatively over-discharged, which is a rare situation and generally occurs when power of the lithium battery 100 is low. Therefore, the third mode may be referred to as an "emergency discharge mode".

The instruction for the electric vehicle 300 to enable the third mode of operation can be obtained by the battery management system 110 before or during discharging, specifically by the user pressing the mode button of the operating panel of the electric vehicle 300, or by the user remotely operating the smart terminal that can communicate with the vehicle. In some embodiments, the battery management system 110 first pushes an inquiry instruction to the electric vehicle 300 regarding whether to enable the third mode of operation. After receiving a feedback instruction of "confirm to enable the third mode" given by the electric vehicle 300, the battery management system 110 controls the discharge cut-off voltage of the lithium battery 100 to be V₁ based on the feedback instruction.

In some implementations of the present disclosure, the battery management system 110 is configured to control, when a discharge voltage of the lithium battery 100 is close to a second discharge threshold voltage V₂ and when it is learned that the electric vehicle 300 is to operate in the third mode in which the second positive electrode active material of the lithium battery 100 exerts the capacity, the lithium battery 100 to continue to be discharged to the first discharge threshold voltage V₁. In this way, enabling frequency of the emergency discharge mode for exerting the capacity of the second positive electrode active material can be reduced.

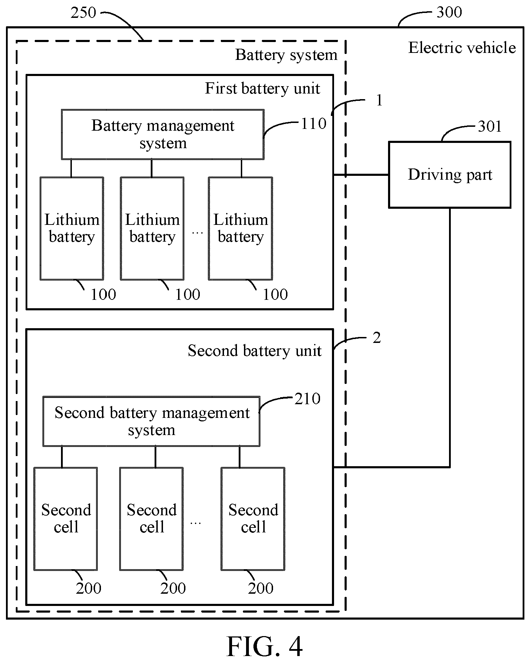

In some other implementations, refer to FIG. 4. A battery system 250 of an electric vehicle 300 further includes a second battery unit 2. The second battery unit 2 includes a number of second cells 200, and the second cell 200 is different from the foregoing lithium battery 100, for example, is a high-rate lithium battery. A negative electrode active material of the second cell 200 may include graphite and/or a silicon-based material. The silicon-based material includes one or more of elemental silicon, silicon oxide, a silicon-based alloy, and a silicon-carbon composite material. The second cell 200 is a conventional lithium battery that does not use lithium metal (elemental lithium and/or a lithium-silicon alloy) as the negative electrode active material, and energy density of the second cell 200 is lower than the energy density of the lithium battery 100 provided in the first aspect of the present disclosure.

Similar to the foregoing first battery unit 1, in addition to the number of second cells 200, the second battery unit 2 may further include a second battery management system 210 for monitoring a charging/discharging status of the second cell 200. Optionally, the second battery management system 210 may be integrated into a same controller with the foregoing battery management system 110. The battery management system 110 may be electrically connected to a BMS of the second battery unit. For example, the battery management system 110 may be connected to the second battery unit through a CAN bus.

According to different endurance requirements for the electric vehicle 300, only the second battery unit 2 may be selected to power the electric vehicle 300; only the first battery unit 1 may be selected to power the electric vehicle 300; or the first battery unit 1 and the second battery unit 2 may be selected to power the electric vehicle 300 together. When the first battery unit 1 is used for power supply, each lithium battery 100 in the first battery unit 1 may be a battery charged to a charge cut-off voltage Vₛ or Vₕ. When the first battery unit 1 is discharged, each lithium battery 100 is generally discharged to a cut-off voltage V_{L}, or to a cut-off voltage V₁ as needed.

In particular, the second battery unit 2 is particularly suitable for providing power to the electric vehicle 300 together with the first battery unit 1 in an emergency situation to meet a power requirement of the electric vehicle 300.

Embodiments of the present disclosure are further described below with reference to a number of embodiments.

### Embodiment 1

A preparation method for a lithium battery includes the following steps:

### (1) Preparation for a positive electrode sheet

960 g of a positive electrode active material ternary NCM 622 (chemical formula: LiNi_{0.6}Co_{0.2}Mn_{0.2}O₂), 30 g of a binder PVDF, 5 g of an acetylene black conductive agent, and 5 g of a carbon fiber conductive agent were added to 2000 g of a solvent NMP (N-methylpyrrolidone), and then stirred in a vacuum mixer to form a stable and uniform positive electrode slurry; and the positive electrode slurry was evenly and intermittently coated on two opposite side surfaces of an aluminum foil (aluminum foil size: width 160 mm, thickness 16 µm), and then dried at a temperature of 100°C to form a ternary positive electrode material layer.

Next, the aluminum foil having the foregoing ternary material layer on two side surfaces was placed in sulfur vapor for evaporation, to infiltrate elemental sulfur into the ternary positive electrode material layer and form a composite positive electrode coating on each of the two side surfaces of the aluminum foil. Each composite positive electrode coating located on each of the two sides of the aluminum foil included the elemental sulfur and NCM622, and a mass of the elemental sulfur was 3 wt% of a mass of NCM622. Afterwards, the aluminum foil having the composite positive electrode coating formed on each of the two sides was pressed into a sheet using a roller press, and then cut into a rectangular electrode sheet with a size of 48 mm*56 mm, and a tab was spot welded in a width direction to obtain the positive electrode sheet for assembling the battery.

### (2) Preparation for an electrolyte solution

In a glove compartment filled with argon (H₂O content≤5ppm, O₂ content≤5ppm), ethylene glycol dimethyl ether (DME), 1,1,2,2-tetrafluoroethyl-2,2,3,3-tetrafluoropropyl ether (TTE), and difluoroethyl acetic acid (DFEA) were mixed in a volume ratio of DME:TTE:DFEA=30:50:20, and then bis(fluorosulfonyl)imide lithium LiN(SO₂F)₂ was added to a mixed solution to obtain an electrolyte solution with a bis(fluorosulfonyl)imide lithium LiN(SO₂F)₂ content of 60 wt%.

### (3) Preparation for a negative electrode sheet

a. First, 1000 g of a silicon oxide powder was added to 2000 g of water, then 50 g of a polyacrylic acid (PAA) binder and 20 g of an acetylene black conductive agent were added, and were stirred vigorously to form a uniform and stable negative electrode slurry. A slit coating device is used to evenly and intermittently coat the negative electrode slurry on two surfaces of a copper foil (copper foil size: width 160 mm, thickness 8 µm), then dried at a temperature of 393K, and after roller pressing, a silicon oxide negative electrode material layer with a thickness of 60 µm was formed on the copper foil to obtain a negative electrode sheet SA1.
b. First, 200 g of PEO with a molecular weight of 600,000 was added into 2000 g of acetonitrile, then 16 g of a nano-alumina powder and 10 g of an anhydrous lithium nitrate powder were added, and stirred vigorously until a uniform and stable protective layer slurry was obtained. The protective layer slurry was evenly and intermittently coated on the negative electrode sheet SA1 to obtain a negative electrode sheet SA2.
c. In the glove compartment (H₂O content≤5ppm, O₂ content≤5ppm), the negative electrode sheet SA2 was laminated with a lithium film (lithium film thickness is 15 µm) coated on a polyethylene terephthalate (PET) release film, so that the protective layer was in contact with the lithium film. Under an action of a hot press, all lithium elements on the lithium film were transferred to the negative electrode sheet SA2 to obtain a negative electrode sheet SA3. A negative electrode material layer of the negative electrode sheet SA3 was 78 µm, and a lithium-silicon negative electrode active material included a lithium-silicon alloy and Li₂O. The negative electrode sheet SA3 was cut into a rectangular electrode sheet with a size of 49 mm*57 mm, and a tab was spot welded in a width direction to obtain the negative electrode sheet for assembling the battery.

### (4) Assembly for the battery

The positive electrode sheet obtained in step (1) and the negative electrode sheet for assembling the battery obtained in step (3) were alternately stacked together with a separator to obtain a bare battery core. The positive electrode sheet and the negative electrode sheet were separated by the separator. The bare battery core was placed in an aluminum-plastic film outer packaging body, and the electrolyte solution prepared in step (2) was injected. The body was then vacuum-sealed, left at 60°C for 48 h, pressurized at 60°C, repackaged, vented, and volume divided to obtain the lithium battery of Embodiment 1.

When the lithium battery of Embodiment 1 is charged to the SOC of 100%, a lithium-silicon composite negative electrode active material includes elemental lithium and a lithium-silicon alloy Li_{4.4}Si. A mole fraction of the elemental lithium is 23%, and a mole fraction of the lithium-silicon alloy Li_{4.4}Si is 71%.

Charge and discharge cycle testing is performed on the lithium battery of Embodiment 1 of the present disclosure in the following method.

Charge and discharge cycle testing is performed on the lithium battery of Embodiment 1 at 25±1 °C on a LAND CT 2001C secondary battery performance testing apparatus. Steps of a regular low SOC cycle (which may be referred to as "regular charge and regular discharge") are as follows: The lithium battery was left for 10 minutes; first, the lithium battery was charged at a constant current of 0.33C to a charge cut-off voltage Vₛ of 3.95 V, then charged at a constant voltage to 0.05 C; the lithium battery was left for 10 minutes; and then the lithium battery was charged at a constant current of 0.33 C to a regular discharge cut-off voltage V_{L} of 2.5 V This is one regular low SOC cycle. Steps of a high energy density cycle (which may be referred to as "high charge and regular discharge") are as follows: The lithium battery was left for 10 minutes; first, the lithium battery was charged at a constant current of 0.2 C to a charge cut-off voltage Vₕ of 4.25 V, then charged at a constant voltage to 0.05 C; the lithium battery was left for 10 minutes; and then the lithium battery was charged at a constant current of 0.33 C to a regular discharge cut-off voltage V_{L} of 2.5V. This is one high energy cycle. Steps of high-charge include: The lithium battery was left for 10 minutes; first, the lithium battery was charged at a constant current of 0.2 C to a charge cut-off voltage Vₕ of 4.25 V, then charged at a constant voltage to 0.05 C. Steps of over-discharge include: The lithium battery was charged to a corresponding cut-off voltage according to a regular low SOC cycle system or a high energy density cycle system; and then the lithium battery was discharged at a constant current of 0.33 C to an over-discharge cut-off voltage of 0.8 V.

Specifically, a charge and discharge system of Embodiment 1 is as follows: (1) 10 regular charge and regular discharge cycles are first performed, and then one high charge and regular discharge cycle is performed; (2) then five regular charge and regular discharge cycles are performed, and then one regular charge and over-discharge cycle is performed; (3) then five regular charge and regular discharge cycles are performed, and then one high charge and regular discharge cycle is performed; and (4) then 10 regular charge and regular discharge cycles are performed, and then one high charge and over-discharge cycle is performed. This is one cycle. The foregoing operations of (1) to (4) are repeated until a battery discharge capacity during the low SOC cycle is lower than 80% of a discharge capacity during the first low SOC cycle. A cycle quantity is a cycle life of the lithium battery. Energy density of the lithium battery at a first high charge and discharge is also tested as ultimate energy density of the battery. Related results are summarized in Table 1.

### Embodiment 2

A lithium battery is provided, which differs from Embodiment 1 in that: In step (3), 800 g of a silicon powder is used to replace the silicon oxide powder, and a thickness of the lithium film coated on the PET release film is 12 µm.

When the lithium battery of Embodiment 2 is fully charged, in a lithium-silicon composite negative electrode active material, a mole fraction of elemental lithium is 24%, and a mole fraction of a lithium-silicon alloy Li_{4.4}Si is 76%.

Charge and discharge cycle testing is performed on the lithium battery of Embodiment 2 according to the charge and discharge system provided in Embodiment 1.

### Embodiment 3

A lithium battery is provided, which differs from Embodiment 1 in that: In step (3), 800 g of a silicon powder is used to replace the silicon oxide powder, and a thickness of the lithium film coated on the PET release film is 10 µm.

When the lithium battery of Embodiment 3 is fully charged, in a lithium-silicon composite negative electrode active material, a mole fraction of elemental lithium is 18%, and a mole fraction of a lithium-silicon alloy Li_{4.4}Si is 82%.

Charge and discharge cycle test is performed on the lithium battery of Embodiment 3 according to the charge and discharge system provided in Embodiment 1.

### Embodiment 4

A lithium battery is provided, which differs from Embodiment 1 in that a positive electrode sheet is prepared according to the following steps: 955 g of a ternary positive electrode active material NCM 811 (chemical formula is LiNi_{0.8}Co_{0.1}Mn_{0.1}O₂), 30 g of a binder PVDF, 10 g of an acetylene black conductive agent, 5 g of a carbon fiber conductive agent, and 93.6 g of Mo₆S₈ were added to 2700 g of NMP, and were stirred evenly to obtain a positive electrode slurry; the positive electrode slurry was coated on two opposite surfaces of an aluminum foil; and then dried at a temperature of 100°C to form a positive electrode material layer. Each positive electrode coating on each of the two sides of the aluminum foil included NCM 811 and Mo₆S₈, and a mass of Mo₆S₈ was 9.8 wt% of a mass of NCM 811. Afterwards, the aluminum foil having the positive electrode material layer on each of the two sides was pressed into a sheet using a roller press, and then cut into a rectangular electrode sheet with a size of 48 mm*56 mm, and a tab was spot welded in a width direction to obtain the positive electrode sheet for assembling the battery.

Charge and discharge cycle testing is performed on the lithium battery of Embodiment 4 according to the charge and discharge system provided in Embodiment 1.

### Embodiment 5

A lithium battery is provided, which differs from Embodiment 1 in that a positive electrode sheet is prepared according to the following steps: 957 g of a positive electrode active material, that is, lithium iron manganese phosphate, 30 g of a binder PVDF, 8 g of an acetylene black conductive agent, 5 g of a carbon fiber conductive agent, and 46.8 g of Mo₆S₈ were added to 2200 g of NMP, and were stirred evenly to obtain a positive electrode slurry; the positive electrode slurry was coated on two opposite surfaces of aluminum foil, and then dried at a temperature of 100°C to form a positive electrode material layer. Each positive electrode coating included NCM 811 and Mo₆S₈, and a mass of Mo₆S₈ was 4.9 wt% of a mass of the lithium iron manganese phosphate. Afterwards, the aluminum foil having the positive electrode material layer on each of the two sides was pressed into a sheet using a roller press, and then cut into a rectangular electrode sheet with a size of 48 mm*56 mm, and a tab was spot welded in a width direction to obtain the positive electrode sheet for assembling the battery.

The lithium battery of Embodiment 5 is charged and discharged according to a charge and discharge system similar to that of Embodiment 1, except that a charge cut-off voltage Vₛ during a regular low SOC cycle is 3.88 V, and a discharge cut-off voltage V_{L} is 2.0 V; a charge cut-off voltage Vₕ during a high energy density cycle is 4.3 V, and a discharge cut-off voltage V_{L} is 2.0 V; and a discharge cut-off voltage during over-discharge is still 0.8 V.

### Embodiment 6

A lithium battery is provided, which differs from Embodiment 5 in that a positive electrode sheet is prepared according to the following steps: 960 g of a first positive electrode active material, that is, lithium iron manganese phosphate, 30 g of a binder PVDF, 5 g of an acetylene black conductive agent, and 5 g of a carbon fiber conductive agent were added to 2100 g of NMP, and were stirred evenly to obtain a first positive electrode slurry; 100 g of a second positive electrode active material, that is, Mo₆S₈, 5 g of a binder PVDF, 3 g of an acetylene black conductive agent, and 3 g of a carbon fiber conductive agent were added to 300 g of NMP, and were stirred evenly to obtain a second positive electrode slurry; a spray-type double-layer coating method was used, the first positive electrode slurry was placed on a lower die head, the second positive electrode slurry was placed on an upper die head, and the first positive electrode slurry and the second positive electrode slurry were simultaneously coated on two opposite side surfaces of an aluminum foil; after dried at a temperature of 100°C, two-layer positive electrode material layers were respectively formed on two opposite sides of the aluminum foil. A positive electrode coating close to the aluminum foil was a first positive electrode coating formed by the first positive electrode slurry. A surface density parameter of a double-layer coating was controlled, so that a mass of Mo₆S₈ was 14 wt% of a mass of lithium iron phosphate. Afterwards, the aluminum foil was pressed into a sheet using a roller press, and then cut into a rectangular electrode sheet with a size of 48 mm*56 mm, and a tab was spot welded in a width direction to obtain the positive electrode sheet for assembling the battery.

Charge and discharge cycle testing is performed on the lithium battery of Embodiment 6 according to the charge and discharge system provided in Embodiment 1.

To highlight beneficial effects of embodiments of the present disclosure, the following comparative examples are particularly provided.

### Comparative example 1

A lithium battery is prepared, which differs from Embodiment 1 in that: In step (1), when the positive electrode sheet is prepared, after the ternary positive electrode material layer is formed through drying, rolling is directly performed.

Charge and discharge cycle testing is performed on the lithium battery of Comparative example 1 according to the charge and discharge system provided in Embodiment 1.

### Comparative example 2

A lithium battery is provided, which differs from Embodiment 1 in that: In step (3), the prepared negative electrode sheet SA1 is directly used as a negative electrode sheet DS1 for assembling the lithium battery of Comparative example 2, and a negative electrode of Comparative example 2 does not include lithium metal; and in step (1), an electrolyte solution solvent is an ester solvent, specifically a mixture of ethylene carbonate (EC) and diethyl carbonate (DEC) in a volume ratio of 4:6.

A charge and discharge cycle testing method of the lithium battery prepared in Comparative example 2 is as follows: Five lithium batteries were taken, and charge and discharge cycle testing is performed on the batteries at 0.33 C at 25±1°C on a LAND CT 2001C secondary battery performance test apparatus. Steps are as follows: The battery was left for 10 minutes, first, the battery was charged at a constant current of 0.33 C to a charge cut-off voltage of 4.2 V, then charged at a constant voltage of 4.2 V to a cut-off voltage of 0.05 C; and the battery was left for 10 minutes, then the battery was discharged at a constant current to 2.5 V This is one charge and discharge cycle. The foregoing steps of charging and discharging are repeated until a discharge capacity of the battery during the cycle is lower than 80% of an initial discharge capacity. A cycle quantity is a cycle life of the lithium battery. A capacity retention rate at a cycle quantity n is recorded, and a ratio of battery energy density at the cycle quantity to initial energy density is used as an energy retention rate of the lithium battery.

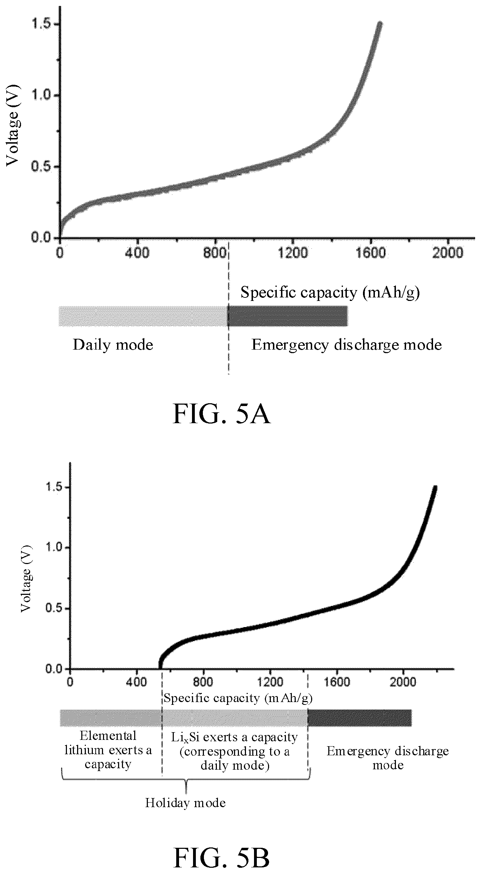

Refer to FIG. 5A and FIG. 5B. FIG. 5A shows a curve indicating a relationship between a negative electrode voltage and a specific capacity of a lithium battery during a two-stage discharge process according to Embodiment 1 of the present disclosure. FIG. 5B shows a curve indicating a relationship between a negative electrode voltage and a specific capacity of a lithium battery during a three-stage discharge process.

It may be learned from FIG. 5A that, in a daily mode (that is, the foregoing second mode, where the lithium battery is charged to V_{S}), a negative electrode of the battery only exerts a capacity of a lithium-silicon alloy LiₓSi (x≤4.4) during discharging. Lithium ions are continuously extracted at the negative electrode and a negative electrode voltage increases until Li_{4.4}Si is changed to the LiₓSi (x≤4.4). During this process, volume expansion withstood by a negative electrode end is weak, and a side reaction between the negative electrode end and an electrolyte solution is minor, so that the battery can maintain a long cycle life. In addition, energy density of the lithium battery produced in this process is still higher than that of a lithium battery with graphite as a negative electrode. It can be learned that in the daily mode, not all lithium elements in the Li_{4.4}Si are extracted during discharging, and some lithium is still pre-stored in the LiₓSi. When the positive electrode of the foregoing lithium battery further includes the foregoing second positive electrode active material, in an emergency discharge mode, the lithium continues to be extracted in the LiₓSi, and the extracted lithium may be intercalated into the second positive electrode active material, so that the lithium battery continues to release energy. In addition, in the emergency discharge mode, the pre-stored lithium extracted from the negative electrode may damage a structure of a lithium-silicon alloy material, and this mode needs to be rarely enabled, to maintain a long cycle life of the whole battery. In FIG. 5A, in the daily mode, a specific capacity of the negative electrode is exerted as 810 mAh/g, and in the emergency mode, a specific capacity of the negative electrode is exerted as 1750 mAh/g. A mass fraction of the second positive electrode active material to the first positive electrode active material is adjusted, so that the specific capacity of the negative electrode exerted in the daily mode and the emergency mode can be implemented.

It can be learned from FIG. 5B that in a holiday mode (that is, the foregoing first mode), an electric vehicle using the lithium battery has a longer endurance mileage. To enable the battery to exert higher energy density, during charging, in addition to the Li_{4.4}Si, a part of lithium elements exists in the form of elemental lithium at the negative electrode, and the elemental lithium can maintain a high specific capacity and a high output voltage, and the energy density of the lithium battery can be very high. During discharge of the battery, capacities of the lithium-silicon alloy Li_{4.4}Si and the elemental lithium are exerted together, and the elemental lithium exerts the capacity first (a voltage of the negative electrode relative to lithium is 0), followed by the lithium-silicon alloy Li_{4.4}Si exerting the capacity until changed to the LiₓSi (same as the daily mode in FIG. 5A), and then the pre-stored lithium in the LiₓSi exerts the capacity (in other words, the second positive electrode active material exerts the capacity, same as the emergency discharge mode in FIG. 5A). In addition, in the holiday mode, a problem of expansion of the negative electrode of the battery is worse than that in the daily mode. Therefore, it is also preferred not to use this mode frequently, to extend the overall cycle life of the battery. In FIG. 5B, in the holiday mode, a specific capacity of the negative electrode is exerted as 1350 mAh/g, and in the emergency mode, a specific capacity of the negative electrode is exerted as 1750 mAh/g. A mole fraction of the elemental lithium to the Li_{4.4}Si when the battery is fully charged is adjusted, so that the specific capacity of the negative electrode and energy density in the holiday mode can be adjusted.

To strongly support the beneficial effects brought by the technical solutions in embodiments of the present disclosure, the following electro-chemical performance tests are respectively performed on lithium batteries. Test results are shown in Table 1.

**Table 1**

| | Ultimate energy density (Wh/kg) | Cycle life |
|---|---|---|
| Embodiment 1 | 353 | 550 |
| Embodiment 2 | 368 | 633 |
| Embodiment 3 | 374 | 517 |
| Embodiment 4 | 362 | 685 |
| Embodiment 5 | 315 | 576 |
| Embodiment 6 | 309 | 549 |
| Comparative example 1 | 347 | 136 |
| Comparative example 2 | 265 | 192 |

It can be learned from Table 1 that a battery of Comparative example 1 in which no sulfur-based compound is introduced into a positive electrode sheet has poor performance in withstanding over-discharge. After experiencing a charge and discharge system including an over-discharge process, the battery cycle life is sharply reduced. In comparison with Comparative example 1 in which the positive electrode sheet does not include elemental sulfur or sulfide, although Embodiment 1 of the present disclosure uses the charge and discharge system including the over-discharge process, the cycle life of the battery of Embodiment 1 is still relatively long, indicating that the battery has good performance in withstanding over-discharge. In this case, high energy density charging may be performed as needed to provide higher energy, and over-discharge may be performed as needed to provide an emergency endurance mileage for an electric vehicle. In addition, the battery of Comparative example 2, in which the negative electrode sheet only uses a silicon dioxide material, does not include a lithium-silicon alloy, and cannot be charged and discharged according to the charging and discharging system of Embodiment 1 of the present disclosure. The energy density of the battery is very low, and performance in withstanding over-discharge of the battery is also poor. Similarly, compared with Comparative example 1, batteries of Embodiment 2 to Embodiment 4 of the present disclosure using ternary materials as first positive electrode active material can also have both a long cycle life and high ultimate energy density. In addition, batteries of Embodiment 5 and Embodiment 6 using lithium iron manganese phosphate as first positive electrode active materials also have similar performance to provide different endurance mileages for the electric vehicle as needed.

The foregoing descriptions are exemplary implementations of the present disclosure, and the descriptions thereof are specific and detailed. It should be noted that a person of ordinary skill in the art may make various improvements and refinements without departing from the principle of the present disclosure, and the improvements and refinements shall fall within the protection scope of the present disclosure.

## Claims

1. A lithium battery (100), comprising:
a positive electrode (20), comprising a first positive electrode active material and a second positive electrode active material, wherein the first positive electrode active material comprises a lithium element, and the second positive electrode active material comprises elemental sulfur and/or a sulfur-containing compound; and
a negative electrode (10), comprising a negative electrode material layer (12), wherein the negative electrode material layer (12) comprises a lithium-silicon composite negative electrode active material, and when the lithium battery (100) is charged to an SOC of 100%, the lithium-silicon composite negative electrode active material comprises a lithium-silicon alloy Li_{4.4}Si and elemental lithium.

2. The lithium battery (100) according to claim 1, wherein a lithium intercalation starting potential of the second positive electrode active material is less than or equal to a lithium intercalation cut-off potential of the first positive electrode active material, and a lithium intercalation cut-off potential of the second positive electrode active material is greater than a potential at which a transition metal element in the first positive electrode active material undergoes an irreversible reduction reaction.

3. The lithium battery (100) according to claim 1 or 2, wherein the first positive electrode active material comprises one or more of a transition metal oxide of lithium and a lithium-containing phosphate; and/or the sulfur-containing compound comprises one or more of metal sulfide and sulfurized polyacrylonitrile, and a metal element in the metal sulfide comprises one or more of lithium, molybdenum, copper, silver, titanium, zinc, manganese, iron, cobalt, and nickel.

4. The lithium battery (100) according to any one of claims 1 to 3, wherein a mass of the second positive electrode active material is 1.6% to 22% of a mass of the first positive electrode active material.

5. The lithium battery (100) according to any one of claims 1 to 4, wherein when the lithium battery (100) is charged to the SOC of 100%, a mole fraction of the elemental lithium in the lithium-silicon composite negative electrode active material ranges from 15% to 95%.

6. The lithium battery (100) according to any one of claims 1 to 5, wherein when the lithium battery (100) is charged to a level not exceeding a first SOC threshold, the lithium-silicon composite negative electrode active material does not comprise the elemental lithium, and comprises a lithium-silicon alloy LiₓSi, wherein 0<x≤4.4, and the first SOC threshold ranges from 15% SOC to 95% SOC.

7. The lithium battery (100) according to any one of claims 1 to 6, wherein a surface of the negative electrode material layer (12) has a protective layer (13), or a surface of the lithium-silicon composite negative electrode active material has a protective layer (13), wherein the protective layer (13) comprises a polymer matrix and a lithium salt.

8. The lithium battery (100) according to claim 7, wherein the polymer matrix comprises one or more of polyethylene oxide, polysiloxane, polyvinylidene fluoride, polymethyl methacrylate, polyacrylonitrile, and a derivative and copolymer thereof; and the lithium salt comprises one or more of lithium nitrate, lithium sulfide, lithium chloride, lithium bromide, lithium iodide, lithium fluoride, and lithium phosphate.

9. The lithium battery (100) according to any one of claims 1 to 8, further comprising an electrolyte solution (40), a solvent in the electrolyte solution (40) comprising at least one of a non-halogenated ether solvent and a fluorinated ether solvent.

10. A preparation method for a lithium battery, comprising the following steps:
forming a silicon-based material layer comprising a silicon-based material on a negative electrode current collector, and performing hot pressing on lithium metal and the silicon-based material layer in an inert atmosphere, so that the lithium metal and the silicon-based material react in situ to form a negative electrode material layer comprising a lithium-silicon composite negative electrode active material, to obtain a negative electrode;
providing a positive electrode, the positive electrode comprising a first positive electrode active material and a second positive electrode active material, wherein the first positive electrode active material comprises a lithium element, and the second positive electrode active material comprises elemental sulfur and/or a sulfur-containing compound; and
assembling the negative electrode and the positive electrode into the lithium battery, wherein when the lithium battery is charged to an SOC of 100%, the lithium-silicon composite negative electrode active material comprises a lithium-silicon alloy Li_{4.4}Si and elemental lithium.

11. The preparation method according to claim 10, wherein in the negative electrode, the lithium-silicon composite negative electrode active material comprises a lithium-silicon alloy LiₓSi, and does not comprise the elemental lithium, wherein x≤4.4.

12. The preparation method according to claim 10 or 11, wherein the silicon-based material comprises one or more of elemental silicon, a silicon oxide, and a silicon-based non-lithium alloy.

13. The preparation method according to any one of claims 10 to 12, wherein the lithium metal is a lithium thin film, and the method further comprises: forming a protective layer on a surface of the silicon-based material layer before hot pressing is performed on the lithium metal and the silicon-based material layer in the inert atmosphere; or forming a protective layer on a surface of the negative electrode material layer after the negative electrode material layer is formed, wherein the protective layer comprises a polymer matrix and a lithium salt.

14. A control method for the lithium battery according to any one of claims 1 to 9, comprising:
controlling, when an instruction indicating that the lithium battery enters a first preset mode is received, a charge cut-off voltage for charging the lithium battery to be Vₕ,
wherein Vₕ>Vₛ, at Vₛ, no elemental lithium is precipitated at a negative electrode of the lithium battery, and when a charging voltage of the lithium battery is between Vₛ and Vₕ, a lithium-silicon composite negative electrode active material comprises Li_{4.4}Si and the elemental lithium.

15. The control method for the lithium battery according to claim 14, comprising: controlling, when an instruction indicating that the lithium battery enters a second preset mode is received, the charge cut-off voltage for charging the lithium battery to be Vₛ.

16. The control method for the lithium battery according to claim 14 or 15, comprising: during charging of the lithium battery, when the charging voltage of the lithium battery reaches Vₛ, controlling, when the instruction indicating that the lithium battery enters the first preset mode is received, the lithium battery to continue to be charged to Vₕ; and controlling, when the instruction indicating that the lithium battery enters the first preset mode is not received, to stop charging the lithium battery.

17. A control method for the lithium battery according to any one of claims 1 to 9, comprising:
controlling, when an instruction indicating that the lithium battery enters a third preset mode is received, the lithium battery to be discharged to a first discharge threshold voltage V₁, wherein V₁ is greater than or equal to a potential V_{R} at which a transition metal element in the first positive electrode active material undergoes an irreversible reduction reaction.

18. The control method for the lithium battery according to claim 17, comprising: when a voltage of the lithium battery during discharging is close to a second discharge threshold voltage V₂, controlling, when the instruction indicating that the lithium battery enters the third preset mode is received, the lithium battery to continue to be discharged to the first discharge threshold voltage V₁, wherein V₂>V₁, and V₂ is equal to a lithium intercalation cut-off potential of the first positive electrode active material.

19. The control method for the lithium battery according to claim 17 or 18, wherein V₁ satisfies: V₁=βV_{R}, and 1.0≤β≤1.5.

20. A battery management system (110), comprising a memory (112) and a processor (111), the memory (112) storing program instructions, and the processor (111) being adapted to load the program instructions and perform the control method for a lithium battery according to any one of claims 14 to 16, and/or perform the control method for a lithium battery according to any one of claims 17 to 19.

21. A battery system (250) for an electric vehicle, comprising a battery management system (110) and at least one lithium battery (100) according to any one of claims 1 to 9.

22. The battery system (250) according to claim 21, wherein the battery management system (110) is configured to control, before or during charging of the lithium battery (100) and when it is learned that the electric vehicle is to operate in a first mode, a charge cut-off voltage for charging the lithium battery (100) to be Vₕ,
wherein Vₕ is an upper limit charge voltage that the lithium battery (100) can withstand, and Vₕ>Vₛ, at Vₛ, no elemental lithium is precipitated at a negative electrode of the lithium battery (100), and when a voltage of the lithium battery (100) is between Vₛ and Vₕ, a lithium-silicon composite negative electrode active material comprises Li_{4.4}Si and the elemental lithium.

23. The battery system (250) according to claim 22, wherein the battery management system (110) is configured to control, before or during charging of the lithium battery (100) and when it is learned that the electric vehicle is to operate in a second mode, the charge cut-off voltage for charging the lithium battery (100) to be V_{S}, wherein an endurance mileage of the electric vehicle in the second mode is less than an endurance mileage of the electric vehicle in the first mode.

24. The battery system (250) according to any one of claims 21 to 23, wherein the battery management system (110) is configured to control, before or during discharging of the lithium battery (100) and when it is learned that the electric vehicle is to operate in a third mode in which a second positive electrode active material can exert a capacity, a discharge cut-off voltage for discharging the lithium battery (100) to be V₁,
wherein V₁ is greater than or equal to a potential at which a transition metal element in the first positive electrode active material undergoes an irreversible reduction reaction.

25. The battery system (250) according to any one of claims 21 to 24, wherein the battery management system (110) is the battery management system (110) according to claim 20.

26. An electric vehicle (300), having the battery system (250) according to any one of claims 21 to 25.
